# EUROPEAN PATENT APPLICATION

(11) **EP 3 219 211 A1**
(43) Date of publication of application: **20.09.2017**
(21) Application number: 16460052.0
(22) Date of filing: 03.08.2016
(51) Int. Cl.: A23L 3/3427, B65D 81/20, B32B 27/12, G08B 13/24

(54) **ABSORBING CARTRIDGE FOR A FOOD PRODUCT PACKAGE**

(30) Priority: 16.03.2016 PL 41652016
(71) Applicant: POMONA Company Ltd. Sp. z o.o., 96-300 Zyrardow (PL)
(72) Inventor: MACKIEWICZ, Aleksander, 05-085 Kampinos (PL)
(74) Representative: Kaminski, Zbigniew

(57) **Abstract**

The invention is an absorbing cartridge put inside the package of a food product, which consists of a non-woven material, especially cellulosic perforated plastic film laminated on both sides, particularly with polyethylene or other welded from four sides, characterized by the fact that inside closed area an absorber (2), an active signalling element (5) wirelessly coupled to external deactivating system are placed.

## Description

The invention relates to an absorbing cartridge used in the interior of a food product packaging, which protects products contained in it against spoilage and theft.

There are known methods for protecting food products placed in packaging to protect products against spoilage caused by bacterial growth in stored products, especially chemical, secreted by the stored products. There are various kinds of ways known to protect products against the influence of these factors. One way is to put in the container the substances neutralizing these harmful factors.

From the Polish patent application P.404178 of the same Applicant the absorbent pad used in food products packaging is known and which consists of non-woven fabric, especially cellulosic non-woven fabric, laminated on both sides with a perforated plastic film, particularly with polyethylene, whereby the fabric is coated on one side with absorber covering the non-woven fabric inside a closed area with polyethylene film and with welded four sides. As demonstrated by the tests, this cartridge largely eliminates the possibility of spoilage of products, especially products for short-term storage. Packaging in this specification is not protected against opening or unauthorized taking out from the shop or warehouse by unauthorized persons.

Various systems preventing such phenomena are known. Products are provided with signalling elements, placed on the product or its packaging only at the stage of storage in the shop or warehouse and which are deactivated by the service, after completion of the transaction, for example at the counter. Failure to deactivate the signalling elements causes an alarm signal activation by an alarm protective gate or similar device placed at the exit of the shop or warehouse. Such systems are manufactured among others by AGIS Fire & Security Sp. z. o.o.

The disadvantage of such solutions is placing a signal on the outside of the package or outside the product, which in many cases makes it easier to damage or remove it allowing to take the product out without making the appropriate steps of deactivating signalling element, in other words, they provide the possibility of theft. Committing theft in this case is possible even by dishonest employees of the shop or warehouse still in warehouses before putting on the shelves.

Purpose of the invention is an absorption cartridge placed in the interior of the food product packaging to protect the product against spoilage, as well as protecting the product from being stolen.

This purpose is realized by the the absorption cartridge put inside of a food product package according to the invention whereby in its internal area absorber and signalling element coupled wirelessly with external deactivation system is enclosed.

The cartridge is preferably provided with an active chemical agent which is a mixture covering non-woven material and supporting the protective atmosphere inside the food packaging.

The active chemical cartridge according to the invention is preferably a mixture of sodium bicarbonate NaHCO₃ and sodium diphosphate, Na₂H₃P₂O₇

Signalling element of the cartridge is preferably protected against climatic influences from stored foodstuffs.

Signalling element is preferably a electronic micro-chip or magnetic chip or radio antenna.

An advantage of the invention is that the protecting signalling element cannot be removed without destroying the cartridge casing, and the active chemical used in the stored product maintains an appropriate level of CO₂.

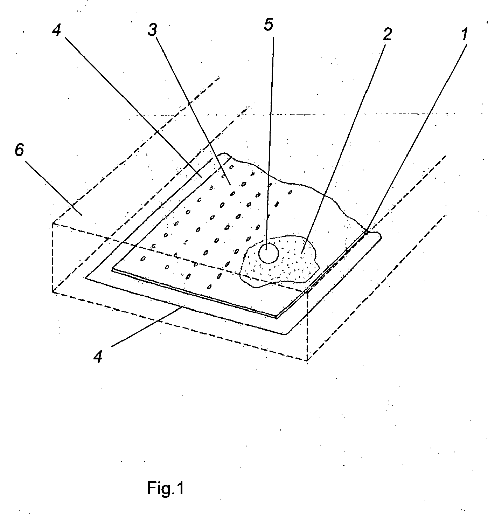

The invention is illustrated in the drawing, which shows a schematic detail of the absorption in axonometric view.

Foodstuff storage cartridge is placed in the food product container 6 shown on the drawing by a dotted line, even in a processing plant and the time of packaging the product into the container. Absorbing cartridge consists of non-woven fabric 1, especially cellulosic non-woven material, perforated, laminated on both sides with plastic film, particularly with polyethylene film 3 or another, whereby the fabric 1 is coated form the one side on the inside with the absorber 3. The entire contribution is welded on four sides 4. Inside this area of a closed cartridge wherein the absorber 2 is placed, also an active signalling element 5, for example, Micro-chip or a diode, is included and upon which a protective protective alarming gate at the exit of e.g. shop acts. This element is then wirelessly coupled to an external deactivation system, whereby the absorbing cartridge 1 with signalling element 5 is placed and can be put inside in a food manufacturing plant at the stage of packaging. Thanks to this signalling element 5 cannot be damaged or removed from the packaging to prevent theft of products also by dishonest employees of the shop before putting the product on the shop counters. Signalling element of the cartridge is thereby protected against climatic influences from stored foodstuffs. Signalling element 5 according to the invention can be any form of security, acting on the waves emitted by the protective gate at the exit of the shop, for example: an electronic micro-chip or magnetic chip or radio antenna.

In addition, the absorption non-woven fabric is coated with the active agent 3, which is a chemical mixture support an adequate level of CO₂ in the stored product used in the protective atmosphere inside the package. This substance may be a mixture of sodium bicarbonate NaHCO₃ and sodium diphosphate, Na₂H₂P₂O₇

Absorbing cartridge according to the invention prevents leakage of fluid and plasma from the product, while contained signalling element protects the product against theft. Due to an active agent of the mixture inside an adequate level of CO2 is maintained in the stored products, used in the protective atmosphere inside the package.

## Claims

1. Absorbing cartridge put inside the package of a food product, which consists of a non-woven material especially cellulosic perforated plastic film laminated on both sides, particularly with polyethylene or other welded from four sides, **characterized in that** inside closed area an absorber (2), and an active signalling element (5) wirelessly coupled to external deactivating system are placed.

2. Cartridge according to the claim 1 **characterized in that** it is provided with an active chemical agent (3) which is a mixture covering non-woven material and supporting the protective atmosphere inside the food packaging.

3. Cartridge according to the claim 1, **characterized in that** the signalling element (5) is protected against climatic influences of the stored foodstuffs.

4. Cartridge according to the claim 1, **characterized in that** the active chemical cartridge according to the invention is a mixture of sodium bicarbonate NaHCO₃ and sodium diphosphate, Na₂H₂P₂O₇.

5. Cartridge according to the claim 1, **characterized in that** the signalling element (5) is a micro-electronic chip.

6. Cartridge according to the claim 1, **characterized in that** the signalling element (5) is a magnetic chip.

7. Cartridge according to the claim 1, **characterized in that** the signalling element (5) is a radio antenna.
